# EUROPÄISCHE PATENTSCHRIFT

(11) **EP 3 130 644 B1**
(45) Veröffentlichungstag und Bekanntmachung des Hinweises auf die Patenterteilung: **21.11.2018**
(21) Anmeldenummer: 16182993.2
(22) Anmeldetag: 05.08.2016
(51) Int. Cl.: C09D 11/037, C09D 11/10, C09D 7/63

(54) **DRUCKFARBE UND DRUCKLACK MIT EXZELLENTER HAFTUNG INSBESONDERE FÜR LEBENSMITTELVERPACKUNGEN**
PRINTING INK AND PRINTING VARNISH WITH EXCELLENT ADHESION, IN PARTICULAR FOR FOODSTUFF PACKAGES
ENCRE D'IMPRIMERIE ET LAQUE D'IMPRIMERIE D'EXCELLENTE ADHERENCE EN PARTICULIER POUR DES EMBALLAGES DE PRODUITS ALIMENTAIRES

(30) Priorität: 10.08.2015 DE 202015104179 U
(43) Veröffentlichungstag der Anmeldung: 15.02.2017
(73) Patentinhaber: Hubergroup India Private Ltd., 396 195 Vapi Gujarat (IN)
(72) Erfinder: Tiwari, Anil Kumar R., 396191 Vapi (Gujarat) (IN); Jamaluddin, Malik, 396191 Vapi (Gujarat) (IN)
(74) Vertreter: Henkel, Breuer & Partner

(56) Entgegenhaltungen:
- WO-A1-2004/053003
- WO-A1-2005/097919
- GB-A- 2 161 811
- US-A1- 2013 157 020

## Beschreibung

Die vorliegende Erfindung betrifft eine Druckfarbe und einen Drucklack mit exzellenter Haftung insbesondere an Lebensmittelverpackungen, und zwar vorzugsweise eine Tiefdruckfarbe, eine Flexodruckfarbe, einen Tiefdrucklack und einen Flexodrucklack.

Drucklacke und insbesondere Druckfarben müssen eine Vielzahl an Anforderungen erfüllen, um zum Bedrucken von Lebensmittelverpackungen eingesetzt werden zu können. Neben einer möglichst guten Haftung der Druckfarbe auf der Verpackung, dürfen die Bestandteile der Druckfarbe, sofern diese - wie dies regelmäßig der Fall ist - kein Lebensmittel sind, nicht oder nur sehr wenig migrieren, damit diese nicht das in der Verpackung enthaltene Lebensmittel kontaminieren. Dies ist insbesondere in dem Fall erforderlich, in dem das Lebensmittel in direkten Kontakt mit der Druckfarbe gelangt, wie beispielsweise in dem Fall einer auf der Innenseite bedruckten Lebensmittelverpackung, aber auch in dem Fall einer auf der Außenseite bedruckten Lebensmittelverpackung.

Zur Verbesserung der Haftung der Druckfarbe auf der Verpackung werden solchen Druckfarben üblicherweise Haftvermittler zugesetzt. Dies ist insbesondere in dem Fall notwendig, dass die Verpackung aus einem Material besteht, auf dem Druckfarben nur schwer haften, wie beispielsweise aus Polyethylenterephthalat oder aus Polyamid. Um für den Einsatz auf Lebensmittelverpackungen geeignet zu sein, darf auch der Haftvermittler keine oder nur sehr wenige migrierende Verbindungen enthalten, um eine Kontamination des in der Verpackung enthaltenen Lebensmittels auszuschließen.

Die GB 2 161 811 A offenbart ein Organotitanat, welches das Reaktionsprodukt ein Titanorthoesters und wenigstens eines Monoalkylphosphats ist.

Aus der WO 2005/097919 A1 ist ein für eine Druckfarbe geeigneter Haftvermittler bekannt, welcher das Reaktionsprodukt eines Polymers mit einer Organophosphorverbindung und mit einer Titanverbindung, wie beispielsweise Titanalkoxyd, ist.

In der US 2013/157020 A1 wird ein Haftvermittler beschrieben, der eine Organotitanverbindung und ein Polyamid enthält, wobei die Organotitanverbindung Titanbutylphosphat sein kann.

Aus der WO 2004/053003 A1 ist ein Haftvermittler zum Verbessern der Haftung einer Druckfarbe auf einem Kunststoffsubstrat bekannt, welcher das Reaktionsprodukt einer Organometallverbindung, wie insbesondere Tetraisopropyltitanat, und einer Organophosphorverbindung, wie insbesondere Di-n-butylposphat, enthält, wobei das Verhältnis der Gesamtzahl an P-OH-Gruppen in dem Phosphatester zu der Anzahl an Molen des Metalls in der Organometallverbindung 3,1:1 bis 8:1 beträgt. Auf dem Markt ist eine Reihe kommerziell vertriebener Haftvermittler auf der Basis solcher Reaktionsprodukte aus Tetraisopropyltitanat und einer oder mehreren Organophosphorverbindungen bekannt. Allerdings enthalten diese Haftvermittler einen hohen Anteil an niedermolekulargewichtigen Verbindungen, wie insbesondere Tri-n-butylphosphat, welche aufgrund ihres geringen Molekulargewichts eine hohe Migrationsfähigkeit aufweisen. Zudem gelten für diese niedermolekularen Verbindungen sehr niedrige Migrationslimits, so dass solche Haftvermittler enthaltende Druckfarben und Drucklacke zum Bedrucken von Lebensmittelverpackungen nicht geeignet oder zumindest nicht zufriedenstellend sind.

Aufgabe der vorliegenden Erfindung ist die Bereitstellung einer Druckfarbe bzw. eines Drucklacks, welche(r) eine gute Haftung insbesondere auch auf Kunststoffverpackungen, wie beispielsweise solchen aus Polyethylenterephthalat oder aus Polyamid, aufweist und sich zudem durch eine sehr geringe Migrationsfähigkeit auszeichnet, so dass diese(r) insbesondere zum Bedrucken einer Lebensmittelverpackung eingesetzt werden kann.

Erfindungsgemäß wird diese Aufgabe gelöst durch eine Druckfarbe oder einen Drucklack, insbesondere zum Bedrucken von Lebensmittelverpackungen, enthaltend:
a) wenigstens ein Bindemittelharz,
b) wenigstens ein Lösungsmittel und
c) wenigstens einen Haftvermittler,
wobei der Haftvermittler ein Copolymer enthält, das aus i) wenigstens einem C₁₋₅-Alkyltitanatmonomer und/oder C₁₋₅-Alkylzirkonatmonomer, wobei die Alkylreste linear oder verzweigt sind, und ii) wenigstens einem Mono-C₄₋₁₀-alkylphosphatmonomer und/oder wenigstens einem Di-C₄₋₁₀-alkylphosphatmonomer zusammengesetzt ist, wobei die Mono- und Di-C₄₋₁₀-alkylphosphatmonomere sowohl lineare als auch verzweigte C₄₋₁₀-Alkylreste umfassen, wobei die Formulierung des Haftvermittlers weniger als 0,25 Gew.-% Tributylphosphat enthält, und, wobei in dem Copolymer des Haftvermittlers das molare Verhältnis von verzweigten C₄₋₁₀-Alkylresten bezogen auf die Summe von linearen und verzweigten C₄₋₁₀-Alkylresten 10 bis 90 % beträgt.

Diese Lösung basiert auf der überraschenden Erkenntnis, dass nach der Synthese eines Copolymers aus i) wenigstens einem C₁₋₅-Alkyltitanatmonomer und/oder C₁₋₅-Alkylzirkonatmonomer und aus ii) wenigstens einem Mono-C₄₋₁₀-alkylphosphatmonomer und/oder wenigstens einem Di-C₄₋₁₀-alkylphosphat-monomer, wobei die Mono- und Di-C₄₋₁₀-alkylphosphatmonomere sowohl lineare als auch verzweigte C₄₋₁₀-Alkylreste umfassen, in geeigneten Mengenverhältnissen und unter geeigneten Reaktionsbedingungen, in dem Reaktionsprodukt nur sehr geringe Mengen an migrationsfähigen niedermolekularen Verbindungen mit sehr niedrigen spezifischen Migrationslimits (10 ppb) enthalten sind, so dass dieses hervorragend als Haftvermittler insbesondere für Druckfarben und Drucklacke zum Bedrucken einer Lebensmittelverpackung geeignet ist. Insbesondere zeichnen sich die diesen Haftvermittler enthaltenden Druckfarben bzw. Drucklacke durch eine hervorragende Haftung auf insbesondere Kunststoffverpackungen, wie beispielsweise solchen aus Polyethylenterephthalat oder aus Polyamid, und zudem durch eine sehr geringe Migrationsfähigkeit aus, so dass diese Druckfarben bzw. Drucklacke insbesondere zum Bedrucken einer Lebensmittelverpackung hervorragend geeignet sind. Vor allem ist die vorliegende Erfindung für Tiefdruckfarben, Flexodruckfarben, Tiefdrucklacke und Flexodrucklacke geeignet.

Besonders niedrige Migrationswerte und mithin besonders gute Eigenschaften zum Bedrucken von Lebensmittelverpackungen werden erhalten, wenn die erfindungsgemäße Druckfarbe bzw. der erfindungsgemäße Drucklack Haftvermittler enthält, der einen Gehalt an Tributylphosphat von maximal 0,20 Gew.-%, bevorzugt von maximal 0,15 Gew.-%, besonders bevorzugt von maximal 0,10 Gew.-%, ganz besonders bevorzugt von maximal 0,075 Gew.-%, weiter bevorzugt von maximal 0,06 Gew.-% und höchst bevorzugt von maximal 0,04 Gew.-% aufweist.

Im Hinblick auf einen bevorzugten Haftvermittlergehalt von weniger als 5 Gew.-%, enthält mithin die erfindungsgemäße Druckfarbe bzw. der erfindungsgemäße Drucklack maximal 75 ppm, bevorzugt maximal 50 ppm, weiter bevorzugt maximal 25 ppm, besonders bevorzugt maximal 20 ppm, insbesondere bevorzugt maximal 15 ppm, ganz bevorzugt maximal 10 ppm und höchst bevorzugt maximal 5 ppm Tributylphosphat. Solche Druckfarben bzw. Drucklacke weisen praktisch kein Migrationspotential auf.

In Weiterbildung des Erfindungsgedankens wird es vorgeschlagen, dass der Haftvermittler ein Copolymer enthält, das aus i) wenigstens einem C₁₋₅-Alkyltitanatmonomer und/oder C₁₋₅-Alkylzirkonatmonomer, wobei die Alkylreste linear oder verzweigt sind, ii) wenigstens einem Mono-C₄₋₁₀-alkylphosphatmonomer und iii) wenigstens einem Di-C₄₋₁₀-alkylphosphatmonomer zusammengesetzt ist.

Grundsätzlich können die Mono- und Di-C₄₋₁₀-alkylphosphatmonomere jeweils den gleichen C₄₋₁₀-Alkylrest, wie beispielsweise jeweils einen Butylrest, oder voneinander verschiedene C₄₋₁₀-Alkylreste aufweisen, wie beispielsweise einen Propylrest in dem Monoalkylphosphatmonomer und Pentyl in dem Dialkylphosphatmonomer. Gute Ergebnisse werden jedoch insbesondere erhalten, wenn das Monoalkylphosphatmonomer und das Dialkylphosphatmonomer jeweils den gleichen C₄₋₁₀-Alkylrest aufweisen.

Es ist zudem bevorzugt, dass sowohl das Monoalkylphosphatmonomer als auch das Di-C₄₋₁₀-alkylphosphatmonomer jeweils einen bzw. zwei C₄₋₆-Alkylreste aufweisen.

Besonders gute Ergebnisse werden dabei insbesondere erhalten, wenn das Mono-C₄₋₁₀-alkylphosphatmonomer Monobutylphosphatmonomer und das Di-C₄₋₁₀-alkylphosphatmonomer Dibutylphosphatmonomer ist.

Im Rahmen der vorliegenden Erfindung wurde es überraschenderweise herausgefunden, dass die Mischung aus wenigstens einem Mono-C₄₋₁₀-alkylphosphatmonomer und wenigstens einem Di-C₄₋₁₀-alkylphosphatmonomer, wobei die Mono- und Di-C₄₋₁₀-alkylphosphatmonomere sowohl lineare als auch verzweigte C₄₋₁₀-Alkylreste umfassen, bei der Synthese des Copolymers dazu führt, dass das Reaktionsprodukt besonders geringe Mengen an migrationsfähigen niedermolekularen Verbindungen und insbesondere nur sehr geringe Mengen an Tributylphosphat, also an Summe aus Tri-n-butylphosphat und Tri-iso-butylphosphat, enthält, wenn das molare Verhältnis von verzweigten C₄₋₁₀-Alkylresten bezogen auf die Summe von linearen und verzweigten C₄₋₁₀-Alkylresten 10 bis 90 % beträgt. Daher sind Druckfarben bzw. Drucklacke mit einem Haftvermittler, der ein solches Copolymer enthält, zum Bedrucken einer Lebensmittelverpackung besonders hervorragend geeignet. Gute Ergebnisse werden dabei insbesondere erhalten, wenn das molare Verhältnis von verzweigten C₄₋₁₀-Alkylresten bezogen auf die Summe von linearen und verzweigten C₄₋₁₀-Alkylresten in dem Copolymer 20 bis 80 %, besonders bevorzugt 30 bis 70 %, weiter bevorzugt 40 bis 60 % und ganz besonders bevorzugt 45 bis 55 %, wie beispielsweise etwa 50 %, beträgt.

In Weiterbildung des Erfindungsgedankens wird es vorgeschlagen, die beiden vorgenannten Ausführungsformen miteinander zu kombinieren. Danach ist es besonders vorteilhaft, wenn das Mono-C₄₋₁₀-alkylphosphatmonomer in dem Copolymer des Haftvermittlers Monobutylphosphatmonomer und das Di-C₄₋₁₀-alkylphosphatmonomer Dibutylphosphatmonomer ist, wobei das molare Verhältnis von iso-Butylresten bezogen auf die Summe von iso-Butylresten und n-Butylresten in dem Copolymer 20 bis 80 %, bevorzugt 30 bis 70 %, besonders bevorzugt 40 bis 60 % und ganz besonders bevorzugt 45 bis 55 % beträgt. Eine Druckfarbe bzw. ein Drucklack mit einem derartigen Haftvermittler weist nicht nur eine sehr gute Haftung auf Kunststoffsubstrat, wie beispielsweise solchem aus Polyethylenterephthalat oder Polyamid, auf, sondern enthält nur sehr wenige niedermolekulare Verbindungen und insbesondere nur sehr geringe Mengen an Tributylphosphat.

Gemäß einer weiteren besonders bevorzugten Ausführungsform der vorliegenden Erfindung beträgt das gewichtsgemittelte Molekulargewicht des Copolymers in dem Haftvermittler der erfindungsgemäßen Druckfarbe bzw. dem erfindungsgemäßen Drucklack 800 bis 10.000 g/mol, weiter bevorzugt 1.000 bis 2.000 g/mol und besonders bevorzugt 1.000 bis 1.500 g/mol. Gemäß der vorliegenden Erfindung wird das Molekulargewicht des Copolymers durch Gelpermeationschromatographie bestimmt.

Nicht nur im Hinblick auf die Verbesserung der Haftung der erfindungsgemäßen Druckfarbe bzw. des erfindungsgemäßen Drucklacks an dem zu bedruckenden Substrat, sondern insbesondere auch im Hinblick auf eine besonders niedrige Migrationsfähigkeit der Druckfarbe bzw. des Drucklacks, wird es in Weiterbildung des Erfindungsgedankens vorgeschlagen, dass der Haftvermittler der erfindungsgemäßen Druckfarbe bzw. des erfindungsgemäßen Drucklacks weniger als 60 Gew.-%, bevorzugt weniger als 50 Gew.-%, besonders bevorzugt weniger als 45 Gew.-% und ganz besonders bevorzugt maximal 40 Gew.-% von Verbindungen mit einem gewichtsgemittelten Molekulargewicht von weniger als 1.000 g/mol enthält.

Besonders gute Ergebnisse werden erhalten, wenn die beiden vorgenannten Ausführungsformen kombiniert werden, d.h., wenn das gewichtsgemittelte Molekulargewicht des Copolymers in dem Haftvermittler der erfindungsgemäßen Druckfarbe bzw. des erfindungsgemäßen Drucklacks 1.000 bis 2.000 g/mol beträgt und der Haftvermittler der erfindungsgemäßen Druckfarbe bzw. des erfindungsgemäßen Drucklacks weniger als 40 Gew.-% von Verbindungen mit einem gewichtsgemittelten Molekulargewicht von weniger als 1.000 g/mol enthält.

Vorzugsweise beträgt das molare Verhältnis von in den Mono- und Di-C₄₋₁₀-alkylphosphatmonomeren, bevorzugt Mono- und Dibutylphosphatmonomeren, enthaltenen P-OH-Gruppen zu dem Metall in dem C₁₋₅-Alkyltitanatmonomer und/oder C₁₋₅-Alkylzirkonatmonomer des Copolymers des Haftvermittlers der erfindungsgemäßen Druckfarbe bzw. des erfindungsgemäßen Drucklacks 0,5:1 bis 2,5:1. Dies führt zu einer besonders gut haftenden und wenig Migrationspotential aufweisenden Zusammensetzung. Bei dieser Ausführungsform der vorliegenden Erfindung ist es besonders bevorzugt, wenn das vorgenannte Verhältnis 1:1 bis 2:1, weiter bevorzugt 1,3:1 bis 1,8:1 und ganz besonders bevorzugt 1,5:1 bis 1,7:1 beträgt.

Als Komponente i) ist in dem Copolymer des Haftvermittlers der erfindungsgemäßen Druckfarbe bzw. des erfindungsgemäßen Drucklacks gemäß einer weiteren besonders bevorzugten Ausführungsform der vorliegenden Erfindung vorzugsweise ein lineares oder verzweigtes C₁₋₅-Alkyltitanatmonomer enthalten. Besonders gute Ergebnisse insbesondere im Hinblick auf die Haftfähigkeit werden dabei erhalten, wenn das Copolymer als Komponente i) ein Tetra-C₁₋₅-alkyltitanatmonomer, besonders bevorzugt ein Tetra-C₂₋₄-alkyltitanatmonomer, ganz besonders bevorzugt ein Tetrapropyltitanatmonomer und höchst bevorzugt Tetraisopropyltitanat enthält.

Gemäß einer ganz besonders bevorzugten Ausführungsform der vorliegenden Erfindung ist das Copolymer des Haftvermittlers der erfindungsgemäßen Druckfarbe bzw. des erfindungsgemäßen Drucklacks aus wenigstens einem Tetraisopropyltitanatmonomer, wenigstens einem Monobutylphosphatmonomer und wenigstens einem Dibutylphosphatmonomer zusammengesetzt, wobei die Mono- und Dibutylphosphatmonomere sowohl iso-Butylreste als auch n-Butylreste umfassen, wobei das molare Verhältnis von iso-Butylresten bezogen auf die Summe von iso-Butylresten und n-Butylresten in dem Copolymer 10 bis 90 % beträgt.

Besonders gute Ergebnisse werden bei der vorstehenden Ausführungsform erhalten, wenn das molare Verhältnis von iso-Butylresten bezogen auf die Summe von iso-Butylresten und n-Butylresten in dem Copolymer des Haftvermittlers der erfindungsgemäßen Druckfarbe bzw. des erfindungsgemäßen Drucklacks 40 bis 60 % und besonders bevorzugt 45 bis 55 % beträgt.

Um einerseits eine ausreichende Verbesserung der Haftung der erfindungsgemäßen Druckfarbe bzw. des erfindungsgemäßen Drucklacks zu erreichen, aber andererseits die drucktechnisch relevanten Eigenschaften der erfindungsgemäßen Druckfarbe bzw. des erfindungsgemäßen Drucklacks nicht zu verschlechtern, wird es in Weiterbildung des Erfindungsgedankens vorgeschlagen, dass die erfindungsgemäße Druckfarbe bzw. der erfindungsgemäße Drucklack 0,1 bis 10 Gew.-%, bevorzugt 0,5 bis 5 Gew.-% und besonders bevorzugt 1 bis 3 Gew.-% des vorstehend beschriebenen Haftvermittlers enthält. Dabei enthält der Haftvermittler vorzugsweise wenigstens 40 Gew.-% und besonders bevorzugt wenigstens 50 Gew.-% des Copolymers, so dass die erfindungsgemäße Druckfarbe bzw. der erfindungsgemäße Drucklack vorzugsweise Drucklack 0,05 bis 6 Gew.-%, bevorzugt 0,25 bis 6 Gew.-% und besonders bevorzugt 0,5 bis 3 Gew.-% des vorstehend beschriebenen Copolymers enthält.

Grundsätzlich kann die erfindungsgemäße Druckfarbe bzw. der erfindungsgemäße Drucklack jedes geeignete Bindemittelharz aufweisen und insbesondere ein oder mehrere für eine Tief- und Flexodruckfarbe bzw. für einen Tief- und Flexodrucklack geeignete Bindemittel. Gute Ergebnisse werden insbesondere für eine erfindungsgemäße Tief- und Flexodruckfarbe bzw. für einen erfindungsgemäßen Tief- und Flexodrucklack erhalten, wenn diese(r) als Bindemittelharz wenigstens eine Verbindung ausgewählt aus der Gruppe bestehend aus Nitrocellulose, Polyurethanen, Maleinatharzen, Kunstharzen, Polyamiden, Acrylaten und beliebigen Mischungen von zwei oder mehr der vorgenannten Verbindungen enthält.

Vorzugsweise enthält die erfindungsgemäße Druckfarbe bzw. der erfindungsgemäße Drucklack, insbesondere, wenn diese(r) als Tief- und Flexodruckfarbe bzw. für ein Tief- und Flexodrucklack eingesetzt werden soll, 1 bis 15 Gew.-% und bevorzugt 2 bis 10 Gew.-% Nitrocellulose und optional 0 bis 30 Gew.-% und bevorzugt 2 bis 25 Gew.-% wenigstens eines weiteren Harzes ausgewählt aus der Gruppe bestehend aus Polyurethanen, Maleinatharzen, Kunstharzen, Polyamiden, Acrylaten oder anderen Bindemitteln und beliebigen Mischungen von zwei oder mehr der vorgenannten Verbindungen enthält.

Grundsätzlich kann die erfindungsgemäße Druckfarbe bzw. der erfindungsgemäße Drucklack jedes geeignete Lösungsmittel enthalten. Insbesondere für den Fall, dass die erfindungsgemäße Druckfarbe bzw. der erfindungsgemäße Drucklack als Tief- und Flexodruckfarbe bzw. als Tief- und Flexodrucklack formuliert werden soll, hat es sich als vorteilhaft erwiesen, dass die Druckfarbe bzw. der Drucklack als Lösungsmittel wenigstens eine Verbindung ausgewählt aus der Gruppe bestehend aus Ethanol, Ethylacetat, Isopropanol, Methoxypropanol, Ethoxypropanol, n-Propanol, n-Propylacetat, iso-Propylacetat oder weiteren Lösungsmitteln, und beliebigen Mischungen von zwei oder mehr der vorgenannten Verbindungen enthält.

Sofern die Zusammensetzung als Druckfarbe formuliert wird, enthält diese vorzugsweise 1 bis 50 Gew.-%, weiter bevorzugt 5 bis 40 Gew.-% und besonders bevorzugt 5 bis 35 Gew.-% eines oder mehrerer Pigmente.

Die erfindungsgemäße Druckfarbe bzw. der erfindungsgemäße Drucklack kann ein oder mehrere Additive enthalten, wie vorzugsweise Additive ausgewählt aus der Gruppe bestehend aus beispielsweise Wachsen, Entschäumern, Gleitadditiven und beliebigen Mischungen von zwei oder mehr der vorgenannten Verbindungen.

Gemäß einer weiteren besonders bevorzugten Ausführungsform der vorliegenden Erfindung enthält die erfindungsgemäße Druckfarbe bzw. der erfindungsgemäße Drucklack die nachfolgenden Bestandteile in den nachfolgend genannten Mengen:
a) 1 bis 40 Gewichtsteile, bevorzugt 5 bis 30 Gewichtsteile und besonders bevorzugt 10 bis 30 Gewichtsteile Bindemittelharz,
b) 60 bis 90 Gewichtsteile, bevorzugt 70 bis 85 Gewichtsteile und besonders bevorzugt 75 bis 85 Gewichtsteile Lösungsmittel,
c) 0,1 bis 10 Gewichtsteile, bevorzugt 0,5 bis 5 Gewichtsteile und besonders bevorzugt 1 bis 3 Gewichtsteile des zuvor beschriebenen Haftvermittlers und
d) 0,01 bis 10 Gewichtsteile, bevorzugt 0,1 bis 5 Gewichtsteile und besonders bevorzugt 0,5 bis 4 Gewichtsteile Additiv,
wobei die Summe der Komponenten a) bis d) 100 Gewichtsteile beträgt, sowie
e) 0 bis 50 Gewichtsteile, bevorzugt 5 bis 40 Gewichtsteile und besonders bevorzugt 5 bis 35 Gewichtsteile Pigment.

Gemäß einer ganz besonders bevorzugten Ausführungsform der vorliegenden Erfindung enthält die erfindungsgemäße Druckfarbe bzw. der erfindungsgemäße Drucklack die nachfolgenden Bestandteile in den nachfolgend genannten Mengen:
a) als Bindemittelharz 1 bis 15 Gew.-% und bevorzugt 3 bis 10 Gew.-% Nitrocellulose und optional 1 bis 25 Gew.-% wenigstens einer weiteren Verbindung ausgewählt aus der Gruppe bestehend aus Polyurethanen, Maleinatharzen, Kunstharzen, Polyamiden, Acrylaten und beliebigen Mischungen von zwei oder mehr der vorgenannten Verbindungen,
b) 70 bis 85 Gewichtsteile und bevorzugt 75 bis 85 Gewichtsteile Lösungsmittel ausgewählt aus der Gruppe bestehend aus Ethanol, Ethylacetat, Isopropanol, Methoxypropanol, Ethoxypropanol oder weiteren Lösungsmitteln, und beliebigen Mischungen von zwei oder mehr der vorgenannten Verbindungen,
c) 0,1 bis 10 Gewichtsteile, bevorzugt 0,5 bis 5 Gewichtsteile und besonders bevorzugt 1 bis 3 Gewichtsteile des zuvor beschriebenen Haftvermittlers und
d) 0,1 bis 5 Gewichtsteile und bevorzugt 0,5 bis 4 Gewichtsteile Additiv ausgewählt aus der Gruppe bestehend beispielsweise aus Wachsen, Entschäumern, Gleitadditiven und beliebigen Mischungen von zwei oder mehr der vorgenannten Verbindungen,
wobei die Summe der Komponenten a) bis d) 100 Gewichtsteile beträgt, sowie
e) 0 bis 50 Gewichtsteile und bevorzugt 5 bis 35 Gewichtsteile Pigment.

Die erfindungsmäße Druckfarbe bzw. der erfindungsmäße Drucklack eignen sich zum Bedrucken einer Vielzahl von Bedruckstoffen und insbesondere zum Bedrucken solcher aus unbehandeltem oder chemisch vorbehandelten Polyethylenterephthalat, wie Korona behandeltem Polyethylenterephthalat, aus Polyamid und aus Polyolefinen, wie insbesondere Polyethylenen oder Polypropylenen, wie beispielsweise koextrudiertem gestrecktem Polypropylen (OPP).

Wie vorstehend dargelegt, eignet sich die erfindungsmäße Druckfarbe insbesondere als Tiefdruckfarbe oder Flexodruckfarbe und der erfindungsmäße Drucklack insbesondere als Tiefdrucklack oder Flexodrucklack. Dabei können die erfindungsmäße Druckfarbe und der erfindungsmäße Drucklack insbesondere für den Frontaldruck als auch für den Zwischenlagendruck eingesetzt werden.

Ein bevorzugter Drucklack für Frontaldruck auf einen Bedruckstoff insbesondere aus Aluminium, Polyethylen, biaxial gestrecktem Polypropylen (BOPP), mit Acryl lackiertem gestrecktem Polypropylen, chemisch behandeltem Polyethylenterephthalat und schrumpfbarem Polyethylen, schrumpfbarem gestrecktem Polypropylen, schrumpfbarem Polyethylenterephthalat und schrumpfbarem gestrecktem Polystyrol, enthält vorzugsweise:
- 0 bis 15 Gew.-%, besonders bevorzugt 3 bis 10 Gew.-% und ganz besonders bevorzugt 5 bis 8 Gew.-% Nitrocellulose,
- 0 bis 15 Gew.-%, besonders bevorzugt 0 bis 10 Gew.-% und ganz besonders bevorzugt 0 bis 5 Gew.-% Polyurethan,
- 0 bis 10 Gew.-%, besonders bevorzugt 0 bis 5 Gew.-% und ganz besonders bevorzugt 2 bis 5 Gew.-% Maleinatharz,
- 0,1 bis 6 Gew.-%, besonders bevorzugt 0,5 bis 5 Gew.-% und ganz besonders bevorzugt 1 bis 3 Gew.-% des zuvor beschriebenen Haftvermittlers,
- 1 bis 6 Gew.-%, besonders bevorzugt 1 bis 4 Gew.-% und ganz besonders bevorzugt 2 bis 4 Gew.-% Additiv(e) und
- 60 bis 90 Gew.-%, besonders bevorzugt 70 bis 90 Gew.-% und ganz besonders bevorzugt 75 bis 85 Gew.-% Lösungsmittel.

Ferner enthält ein bevorzugter Drucklack für Zwischenlagendruck auf einen Bedruckstoff insbesondere aus Polyethylen, biaxial gestrecktem Polypropylen, mit Acryl lackiertem gestrecktem Polypropylen und chemisch behandeltem Polyethylenterephthalat vorzugsweise:
- 3 bis 15 Gew.-%, besonders bevorzugt 3 bis 10 Gew.-% und ganz besonders bevorzugt 3 bis 8 Gew.-% Nitrocellulose,
- 1 bis 15 Gew.-%, besonders bevorzugt 5 bis 10 Gew.-% und ganz besonders bevorzugt 7 bis 10 Gew.-% Polyurethan,
- 0 bis 10 Gew.-%, besonders bevorzugt 0 bis 5 Gew.-% und ganz besonders bevorzugt 0 bis 1 Gew.-% Maleinatharz,
- 0,1 bis 6 Gew.-%, besonders bevorzugt 0,5 bis 5 Gew.-% und ganz besonders bevorzugt 1 bis 3 Gew.-% des zuvor beschriebenen Haftvermittlers,
- 0,5 bis 7 Gew.-%, besonders bevorzugt 0,5 bis 6 Gew.-% und ganz besonders bevorzugt 0,5 bis 5 Gew.-% Additiv(e) und
- 60 bis 90 Gew.-%, besonders bevorzugt 70 bis 90 Gew.-% und ganz besonders bevorzugt 75 bis 85 Gew.-% Lösungsmittel.

Hingegen enthält ein bevorzugter Drucklack für Zwischenlagendruck auf einen Bedruckstoff insbesondere aus chemisch behandeltem Polyethylenterephthalat, Korona behandeltem Polyethylenterephthalat, aus Polyamid, gestrecktem Polyamid, Polyolefinen (insbesondere Polyethylen niedriger Dichte und Polyethylen hoher Dichte) und koextrudiertem, gestrecktem, vorbehandeltem Polypropylen (OPP) vorzugsweise:
- 0 bis 15 Gew.-%, besonders bevorzugt 1 bis 10 Gew.-% und ganz besonders bevorzugt 2 bis 5 Gew.-% Nitrocellulose,
- 1 bis 30 Gew.-%, besonders bevorzugt 5 bis 25 Gew.-% und ganz besonders bevorzugt 7 bis 20 Gew.-% Polyamid,
- 0 bis 10 Gew.-%, besonders bevorzugt 0 bis 6 Gew.-% und ganz besonders bevorzugt 0 bis 4 Gew.-% Kunstharz,
- 0,1 bis 6 Gew.-%, besonders bevorzugt 0,5 bis 5 Gew.-% und ganz besonders bevorzugt 1 bis 3 Gew.-% des zuvor beschriebenen Haftvermittlers,
- 0,5 bis 7 Gew.-%, besonders bevorzugt 0,5 bis 6 Gew.-% und ganz besonders bevorzugt 0,5 bis 5 Gew.-% Additiv(e) und
- 50 bis 90 Gew.-%, besonders bevorzugt 60 bis 90 Gew.-% und ganz besonders bevorzugt 60 bis 85 Gew.-% Lösungsmittel.

Außerdem enthält ein bevorzugter Drucklack für Frontaldruck auf einen Bedruckstoff insbesondere aus Papier, metallisiertem Papier, mit Aluminium kaschiertem Papier, mit Nitrocellulose lackierter Aluminiumfolie, rückseitig mit Polyvinylidenchlorid oder mit Polyethylen beschichtetem Papier und mit Acryl lackierter Folie aus gestrecktem Polypropylen vorzugsweise:
- 3 bis 15 Gew.-%, besonders bevorzugt 3 bis 10 Gew.-% und ganz besonders bevorzugt 3 bis 8 Gew.-% Nitrocellulose,
- 1 bis 10 Gew.-%, besonders bevorzugt 3 bis 7 Gew.-% und ganz besonders bevorzugt 3 bis 5 Gew.-% Weichmacher,
- 1 bis 10 Gew.-%, besonders bevorzugt 1 bis 5 Gew.-% und ganz besonders bevorzugt 2 bis 5 Gew.-% Kunstharz,
- 1 bis 5 Gew.-%, besonders bevorzugt 1 bis 4 Gew.-% und ganz besonders bevorzugt 1 bis 3 Gew.-% des zuvor beschriebenen Haftvermittlers,
- 0,5 bis 7 Gew.-%, besonders bevorzugt 0,5 bis 5 Gew.-% und ganz besonders bevorzugt 0,5 bis 4 Gew.-% Additiv(e) und
- 60 bis 90 Gew.-%, besonders bevorzugt 70 bis 90 Gew.-% und ganz besonders bevorzugt 75 bis 85 Gew.-% Lösungsmittel.

Schließlich enthält ein bevorzugter Drucklack für Frontaldruck auf einen Bedruckstoff insbesondere aus Polyethylen mit niedriger Dichte und Polypropylen mit niedriger Dichte vorzugsweise:
- 3 bis 15 Gew.-%, besonders bevorzugt 3 bis 10 Gew.-% und ganz besonders bevorzugt 3 bis 8 Gew.-% Nitrocellulose,
- 5 bis 15 Gew.-%, besonders bevorzugt 9 bis 15 Gew.-% und ganz besonders bevorzugt 9 bis 12 Gew.-% Polyamid,
- 1 bis 10 Gew.-%, besonders bevorzugt 1 bis 5 Gew.-% und ganz besonders bevorzugt 2 bis 5 Gew.-% Kunstharz,
- 0,5 bis 5 Gew.-%, besonders bevorzugt 0,5 bis 3 Gew.-% und ganz besonders bevorzugt 1 bis 2 Gew.-% des zuvor beschriebenen Haftvermittlers,
- 0,5 bis 7 Gew.-%, besonders bevorzugt 0,5 bis 5 Gew.-% und ganz besonders bevorzugt 0,5 bis 4 Gew.-% Additiv(e) und
- 60 bis 90 Gew.-%, besonders bevorzugt 70 bis 90 Gew.-% und ganz besonders bevorzugt 75 bis 85 Gew.-% Lösungsmittel.

Alle vorstehenden Drucklacke können durch den Zusatz von Pigment auch als Druckfarbe formuliert werden, wobei der Pigmentgehalt vorzugsweise 1 bis 50 Gew.-%, besonders bevorzugt 5 bis 40 Gew.-% und ganz besonders bevorzugt 5 bis 35 Gew.-% beträgt.

Ein zur Herstellung des in der erfindungsgemäßen Druckfarbe bzw. dem erfindungsgemäßen Drucklack enthaltenen Haftvermittlers geeignetes Verfahren umfasst beispielsweise die nachfolgenden Schritte:
a) Bereitstellen einer Mischung aus einem C₄₋₁₀-n-Alkohol, einem C₄₋₁₀-iso-Alkohol und Phosphorpentoxid,
b) Reagieren der in dem Schritt a) bereitgestellten Mischung bei 60 bis 150°C für 0,1 bis 5 Stunden, bevorzugt bei 80 bis 100°C für 0,25 bis 2 Stunden,
c) Abkühlen der Reaktionsmischung auf 0 bis 50°C, bevorzugt auf Umgebungstemperatur,
d) Zugabe von einem C₁₋₅-Alkyltitanat und/oder C₁₋₅-Alkylzirkonat zu der in dem Schritt c) erhaltenen Mischung,
e) Reagieren der in dem Schritt d) bereitgestellten Mischung bei 40 bis 150°C für 0,1 bis 5 Stunden, bevorzugt bei 70 bis 90°C für 1 bis 3 Stunden,
f) Abkühlen der Reaktionsmischung auf 0 bis 50°C, bevorzugt auf Umgebungstemperatur, und
g) optional Zugabe von C₁₋₅-Alkohol und/oder Verdünnungsmittel.

Dementsprechend umfasst ein Verfahren zur Herstellung des gemäß der vorliegenden Erfindung ganz besonders bevorzugt als Haftvermittler in der erfindungsgemäßen Druckfarbe bzw. dem erfindungsgemäßen Drucklack enthaltenen Copolymers, das aus wenigstens einem Tetraisopropyltitanatmonomer, wenigstens einem Monobutylphosphatmonomer und wenigstens einem Dibutylphosphatmonomer zusammengesetzt ist, wobei die Mono- und Dibutylphosphatmonomere sowohl iso-Butylreste als auch n-Butylreste umfassen, wobei das molare Verhältnis von iso-Butylresten bezogen auf die Summe von iso-Butylresten und n-Butylresten in dem Copolymer 10 bis 90 % beträgt, beispielsweise die folgenden Schritte:
a) Bereitstellen einer Mischung aus n-Butanol, iso-Butanol und Phosphorpentoxid,
b) Reagieren der in dem Schritt a) bereitgestellten Mischung bei 80 bis 100°C für 0,25 bis 2 Stunden, bevorzugt bei 90 bis 95°C für 0,5 bis 1 Stunde,
c) Abkühlen der Reaktionsmischung auf 30 bis 35°C,
d) Zugabe von Titantetraisopropylat zu der in dem Schritt c) erhaltenen Mischung,
e) Reagieren der in dem Schritt d) bereitgestellten Mischung bei 40 bis 100°C für 1 bis 3 Stunden, bevorzugt bei 80 bis 90°C für 1,5 bis 2 Stunden,
f) Abkühlen der Reaktionsmischung auf 40 bis 50°C und
g) Zugabe von Isopropanol und/oder optional Verdünnungsmittel, bevorzugt Ethanol und Ethylacetat, und Rühren der Mischung für 0,1 bis 2 Stunden, bevorzugt 0,5 Stunden.

Vorzugsweise wird in dem Schritt a) eine Säurezahl zwischen 300 und 400 und besonders bevorzugt zwischen 330 und 350 mg KOH/g eingestellt.

Zudem ist es bevorzugt, in dem Schritt a) n-Butanol und iso-Butanol jeweils in einer Menge von 1 bis 18 Gew.-%, besonders bevorzugt von 8,5 bis 16 Gew.-% und ganz besonders bevorzugt von 7 bis 16 Gew.-%, bezogen auf die Summe der Mengen aller in dem Verfahren zugegebenen Verbindungen, also die Summe der Mengen von n-Butanol, iso-Butanol, Phosphorpentoxid, Titantetraisopropylat, Isopropanol, Ethanol und Ethylacetat, zuzugeben. Dabei beträgt das Gewichtsverhältnis von n-Butanol und iso-Butanol vorzugsweise 1:5 bis 5:1, besonders bevorzugt 1:2 bis 2:1, ganz besonders bevorzugt 1:1,5 bis 1,5:1 und höchst bevorzugt 1:1,25 bis 1,25:1, wie beispielsweise etwa 1:1.

In Weiterbildung des Erfindungsgedankens wird es vorgeschlagen, in dem Schritt a) Phosphorpentoxid in einer Menge von 1 bis 18 Gew.-%, besonders bevorzugt von 7 bis 18 Gew.-% und ganz besonders bevorzugt von 7 bis 16 Gew.-%, bezogen auf die Summe der Mengen aller in dem Verfahren zugegebenen Verbindungen, also die Summe der Mengen von n-Butanol, iso-Butanol, Phosphorpentoxid, Titantetraisopropylat, Isopropanol, Ethanol und Ethylacetat, zuzugeben. Dabei beträgt das Gewichtsverhältnis von Phosphorpentoxid zu der Summe an n Butanol und iso-Butanol vorzugsweise 1:5 bis 2:1, besonders bevorzugt 1:3 bis 1:1, ganz besonders bevorzugt 1:2,5 bis 1:1,5 und höchst bevorzugt 1:2,25 bis 1:1,75,wie beispielsweise etwa 1:2.

Gute Ergebnisse werden insbesondere erhalten, wenn in dem Schritt d) Titantetraisopropylat in einer Menge von 29 bis 60 Gew.-%, besonders bevorzugt von 35 bis 60 Gew.-% und ganz besonders bevorzugt von 40 bis 60 Gew.-%, bezogen auf die Summe der Mengen aller in dem Verfahren zugegebenen Verbindungen, also die Summe der Mengen von n-Butanol, iso-Butanol, Phosphorpentoxid, Titantetraisopropylat, Isopropanol, Ethanol und Ethylacetat, zugegeben wird. Dabei beträgt das Gewichtsverhältnis von Titantetraisopropylat zu der Summe an in dem Schritt a) zugegebenen n-Butanol und iso-Butanol vorzugsweise 6:1 bis 1:1, besonders bevorzugt 5:1 bis 1,25:1, ganz besonders bevorzugt 3,5:1 bis 1,5:1 und höchst bevorzugt 2,75:1 bis 1,75:1, wie beispielsweise etwa 2:1.

Schließlich werden in dem Schritt g) Isopropanol vorzugsweise in einer Menge von 0 bis 20 Gew.-%, besonders bevorzugt von 5 bis 15 Gew.-% und ganz besonders bevorzugt von 5 bis 10 Gew.-%, Ethanol vorzugsweise in einer Menge von 0 bis 2,5 Gew.-%, besonders bevorzugt von 0 bis 2 Gew.-% und ganz besonders bevorzugt von 0 bis 1,5 Gew.-% und Ethylacetat vorzugsweise in einer Menge von 0 bis 2 Gew.-%, besonders bevorzugt von 0 bis 1,5 Gew.-% und ganz besonders bevorzugt von 0 bis 1 Gew.-%, jeweils bezogen auf die Summe der Mengen aller in dem Verfahren zugegebenen Verbindungen, also die Summe der Mengen von n-Butanol, iso-Butanol, Phosphorpentoxid, Titantetraisopropylat, Isopropanol, Ethanol und Ethylacetat, zugegeben.
Ein Verfahren zur Herstellung einer Druckfarbe oder eines Drucklacks gemäß der vorliegenden Erfindung umfasst das Vermischen eines wie zuvor hergestellten Haftvermittlers mit Bindemittelharz und Lösungsmittel.

Weiterhin offenbart ist eine Druckfarbe oder ein Drucklack, insbesondere zum Bedrucken von Lebensmittelverpackungen, enthaltend:
a) wenigstens ein Bindemittelharz,
b) wenigstens ein Lösungsmittel und
c) wenigstens einen Haftvermittler,
wobei der Haftvermittler ein Copolymer enthält, das aus i) wenigstens einem C₁₋₅-Alkyltitanatmonomer und/oder C₁₋₅-Alkylzirkonatmonomer, wobei die Alkylreste linear oder verzweigt sind, und ii) wenigstens einem Mono-C₄₋₁₀-alkylphosphatmonomer und/oder wenigstens einem Di-C₄₋₁₀-alkylphosphatmonomer zusammengesetzt ist, wobei der Haftvermittler weniger als 0,25 Gew.-% Tributylphosphat enthält.
Aufgrund der geringen Menge an Tributylphosphat als migrationsfähiger niedermolekularen Verbindung, ist diese Druckfarbe bzw. dieser Drucklack hervorragend geeignet zum Bedrucken einer Lebensmittelverpackung. Insbesondere zeichnet sich die diesen Haftvermittler enthaltende Druckfarbe bzw. Drucklack durch eine hervorragende Haftung auf insbesondere Kunststoffverpackungen, wie beispielsweise solchen aus Polyethylenterephthalat oder aus Polyamidaus. Vor allem ist die vorliegende Erfindung für Tiefdruckfarben, Flexodruckfarben, Tiefdrucklacke und Flexodrucklacke geeignet.

Vorzugsweise beträgt die Menge an in dem Haftvermittler enthaltenem Tributylphosphat maximal 0,20 Gew.-%, bevorzugt maximal 0,15 Gew.-%, besonders bevorzugt maximal 0,10 Gew.-%, ganz besonders bevorzugt maximal 0,075 Gew.-%, weiter bevorzugt maximal 0,06 Gew.-% und höchst bevorzugt maximal 0,04 Gew.-%.

Ferner ist es bevorzugt, dass die Druckfarbe bzw. der Drucklack maximal 75 ppm, bevorzugt maximal 50 ppm, weiter bevorzugt maximal 25 ppm, besonders bevorzugt maximal 20 ppm, insbesondere bevorzugt maximal 15 ppm, ganz bevorzugt maximal 10 ppm und höchst bevorzugt maximal 5 ppm Tributylphosphat enthält.

## Patentansprüche

1. Druckfarbe oder Drucklack, insbesondere zum Bedrucken von Lebensmittelverpackungen, enthaltend:
a) wenigstens ein Bindemittelharz,
b) wenigstens ein Lösungsmittel und
c) wenigstens einen Haftvermittler,
wobei der Haftvermittler ein Copolymer enthält, das aus i) wenigstens einem C₁₋₅-Alkyltitanatmonomer und/oder C₁₋₅-Alkylzirkonatmonomer, wobei die Alkylreste linear oder verzweigt sind, und ii) wenigstens einem Mono-C₄₋₁₀-alkylphosphatmonomer und/oder wenigstens einem Di-C₄₋₁₀-alkylphosphatmonomer zusammengesetzt ist, wobei die Mono- und Di-C₄₋₁₀-alkylphosphatmonomere sowohl lineare als auch verzweigte C₄₋₁₀-Alkylreste umfassen, wobei der Haftvermittler weniger als 0,25 Gew.-% Tributylphosphat enthält, und, wobei in dem Copolymer des Haftvermittlers das molare Verhältnis von verzweigten C₄₋₁₀-Alkylresten bezogen auf die Summe von linearen und verzweigten C₄₋₁₀-Alkylresten 10 bis 90 % beträgt.

2. Druckfarbe oder Drucklack nach Anspruch 1,
**dadurch gekennzeichnet, dass**
die Menge an in dem Haftvermittler enthaltenem Tributylphosphat maximal 0,20 Gew.-%, bevorzugt maximal 0,15 Gew.-%, besonders bevorzugt maximal 0,10 Gew.-%, ganz besonders bevorzugt maximal 0,075 Gew.-%, weiter bevorzugt maximal 0,06 Gew.-% und höchst bevorzugt maximal 0,04 Gew.-% beträgt.

3. Druckfarbe oder Drucklack nach Anspruch 1 oder 2,
**dadurch gekennzeichnet, dass**
diese(r) maximal 75 ppm, bevorzugt maximal 50 ppm, weiter bevorzugt maximal 25 ppm, besonders bevorzugt maximal 20 ppm, insbesondere bevorzugt maximal 15 ppm, ganz bevorzugt maximal 10 ppm und höchst bevorzugt maximal 5 ppm Tributylphosphat enthält.

4. Druckfarbe oder Drucklack nach zumindest einem der vorstehenden Ansprüche,
**dadurch gekennzeichnet, dass**
der Haftvermittler ein Copolymer enthält, das aus i) wenigstens einem C₁₋₅-Alkyltitanatmonomer und/oder C₁₋₅-Alkylzirkonatmonomer, ii) wenigstens einem Mono-C₄₋₁₀-alkylphosphatmonomer und iii) wenigstens einem Di-C₄₋₁₀-alkylphosphatmonomer zusammengesetzt ist, wobei die Mono- und Di-C₄₋₁₀-alkylphosphatmonomere des Copolymers sowohl lineare als auch verzweigte C₄₋₁₀-Alkylreste umfassen, wobei die Mono- und Di-C₄₋₁₀-alkylphosphatmonomere vorzugsweise jeweils einen C₄₋₆-Alkylrest aufweisen und besonders bevorzugt das Mono-C₄₋₁₀-alkylphosphat-monomer Monobutylphosphatmonomer und das Di-C₄₋₁₀-alkylphosphat-monomer Dibutylphosphatmonomer ist.

5. Druckfarbe oder Drucklack nach zumindest einem der vorstehenden Ansprüche,
**dadurch gekennzeichnet, dass**
in dem Copolymer des Haftvermittlers das molare Verhältnis von verzweigten C₄₋₁₀-Alkylresten bezogen auf die Summe von linearen und verzweigten C₄₋₁₀-Alkylresten 20 bis 80 %, bevorzugt 30 bis 70 %, besonders bevorzugt 40 bis 60 % und ganz besonders bevorzugt 45 bis 55 % beträgt.

6. Druckfarbe oder Drucklack nach Anspruch 5,
**dadurch gekennzeichnet, dass**
in dem Copolymer des Haftvermittlers das Mono-C₄₋₁₀-alkylphosphatmonomer Monobutylphosphatmonomer und das Di-C₄₋₁₀-alkylphosphatmonomer Dibutylphosphatmonomer ist, wobei das molare Verhältnis von iso-Butylresten bezogen auf die Summe von iso-Butylresten und n-Butylresten in dem Copolymer 20 bis 80 %, bevorzugt 30 bis 70 %, besonders bevorzugt 40 bis 60 % und ganz besonders bevorzugt 45 bis 55 % beträgt.

7. Druckfarbe oder Drucklack nach zumindest einem der vorstehenden Ansprüche,
**dadurch gekennzeichnet, dass**
das gewichtsgemittelte Molekulargewicht des Copolymers des Haftvermittlers 800 bis 10.000 g/mol, bevorzugt 1.000 bis 2.000 g/mol und besonders bevorzugt 1.000 bis 1.500 g/mol beträgt.

8. Druckfarbe oder Drucklack nach zumindest einem der vorstehenden Ansprüche,
**dadurch gekennzeichnet, dass**
das Copolymer des Haftvermittlers aus wenigstens einem Tetraisopropy-Ititanatmonomer, wenigstens einem Monobutylphosphatmonomer und wenigstens einem Dibutylphosphatmonomer zusammengesetzt ist, wobei die Mono- und Dibutylphosphatmonomere sowohl iso-Butylreste als auch n-Butylreste umfassen, wobei das molare Verhältnis von iso-Butylresten bezogen auf die Summe von iso-Butylresten und n-Butylresten in dem Copolymer 10 bis 90 % beträgt.

9. Druckfarbe oder Drucklack nach zumindest einem der vorstehenden Ansprüche,
**dadurch gekennzeichnet, dass** diese(r) 0,05 bis 6 Gew.-%, bevorzugt 0,25 bis 6 Gew.-% und besonders bevorzugt 0,5 bis 2 Gew.-% des Copolymers enthält.

10. Druckfarbe oder Drucklack nach zumindest einem der vorstehenden Ansprüche,
**dadurch gekennzeichnet, dass**
das Bindemittelharz wenigstens eine Verbindung ausgewählt aus der Gruppe bestehend aus Nitrocellulose, Polyurethanen, Maleinatharzen, Kunstharzen, Polyamiden, Acrylaten und beliebigen Mischungen von zwei oder mehr der vorgenannten Verbindungen enthält.

11. Druckfarbe oder Drucklack nach Anspruch 10,
**dadurch gekennzeichnet, dass**
diese(r) als Bindemittelharz 1 bis 15 Gew.-% und bevorzugt 2 bis 10 Gew.-% Nitrocellulose und optional 0 bis 30 Gew.-% und bevorzugt 2 bis 25 Gew.-% wenigstens eines weiteren Harzes ausgewählt aus der Gruppe bestehend aus Polyurethanen, Maleinatharzen, Kunstharzen, Polyamiden, Acrylaten und beliebigen Mischungen von zwei oder mehr der vorgenannten Verbindungen enthält.

12. Druckfarbe oder Drucklack nach zumindest einem der vorstehenden Ansprüche,
**dadurch gekennzeichnet, dass**
diese(r) enthält:
a) 1 bis 40 Gewichtsteile, bevorzugt 5 bis 30 Gewichtsteile und besonders bevorzugt 10 bis 30 Gewichtsteile Bindemittelharz,
b) 60 bis 90 Gewichtsteile, bevorzugt 70 bis 85 Gewichtsteile und besonders bevorzugt 75 bis 85 Gewichtsteile Lösungsmittel,
c) 0,1 bis 10 Gewichtsteile, bevorzugt 0,5 bis 5 Gewichtsteile und besonders bevorzugt 1 bis 3 Gewichtsteile Haftvermittler und
d) 0,01 bis 10 Gewichtsteile, bevorzugt 0,1 bis 5 Gewichtsteile und besonders bevorzugt 0,5 bis 4 Gewichtsteile Additive,
wobei die Summe der Komponenten a) bis d) 100 Gewichtsteile beträgt, sowie
e) 0 bis 50 Gewichtsteile, bevorzugt 5 bis 40 Gewichtsteile und besonders bevorzugt 5 bis 35 Gewichtsteile Pigment.

13. Verfahren zur Herstellung einer Druckfarbe oder eines Drucklacks nach einem der Ansprüche 1 bis 12, umfassend die Herstellung eines Haftvermittlers umfassend die nachfolgenden Schritte:
a) Bereitstellen einer Mischung aus einem C₄₋₁₀-n-Alkohol, einem C₄₋₁₀-iso-Alkohol und Phosphorpentoxid,
b) Reagieren der in dem Schritt a) bereitgestellten Mischung bei 60 bis 150°C für 0,1 bis 5 Stunden, bevorzugt bei 80 bis 100°C für 0,25 bis 2 Stunden,
c) Abkühlen der Reaktionsmischung auf 0 bis 50°C, bevorzugt auf Umgebungstemperatur,
d) Zugabe von einem C₁₋₅-Alkyltitanat und/oder C₁₋₅-Alkylzirkonat zu der in dem Schritt c) erhaltenen Mischung,
e) Reagieren der in dem Schritt d) bereitgestellten Mischung bei 40 bis 150°C für 0,1 bis 5 Stunden, bevorzugt bei 70 bis 90°C für 1 bis 3 Stunden,
f) Abkühlen der Reaktionsmischung auf 0 bis 50°C, bevorzugt auf Umgebungstemperatur, und
g) optional Zugabe von C₁₋₅-Alkohol und/oder Verdünnungsmittel, sowie das Vermischen des Haftvermittlers mit Bindemittelharz und Lösungsmittel.

## Claims

1. Printing ink or printing varnish, in particular for the printing of food packagings, comprising:
a) at least one binder resin,
b) at least one solvent and
c) at least one adhesion promoter,
wherein the adhesion promoter contains a copolymer, which is composed of i) at least one C₁₋₅-alkyl titanate monomer and/or C₁₋₅₋alkyl zirconate monomer, wherein the alkyl residues are linear or branched, and ii) at least one mono-C₄₋₁₀-alkyl phosphate monomer and/or at least one Di-C₄₋₁₀₋alkyl phosphate monomer, wherein the mono- and Di-C₄₋₁₀₋alkyl phosphate monomers comprise linear as well as branched C₄₋₁₀₋alkyl residues, wherein the adhesion promoter comprises less than 0.25 wt.-% tributyl phosphate, and, wherein the molar ratio of branched C₄₋₁₀₋alkyl residues in the copolymer of the adhesion promoter based on the sum of linear and branched C₄₋₁₀₋alkyl residues is 10 to 90 %.

2. Printing ink or printing varnish in accordance with claim,
**characterized in that**
the amount of tributyl phosphate contained in the adhesion promoter is at most 0.20 wt.-%, preferably at most 0.15 wt.-%, more preferably at most 0.10 wt.-%, particularly preferably at most 0.075 wt.-%, further preferably at most 0.06 wt.-% and most preferably at most 0.04 wt.-%.

3. Printing ink or printing varnish in accordance with claim 1 or 2,
**characterized in that**
it contains at most 75 ppm, preferably at most 50 ppm, further preferably at most 25 ppm, more preferably at most 20 ppm, particularly preferably at most 15 ppm, even more preferably at most 10 ppm and most preferably at most 5 ppm tributyl phosphate.

4. Printing ink or printing varnish in accordance with any of the preceding claims,
**characterized in that**
the adhesion contains a copolymer, which is composed of i) at least a C₁₋₅₋alkyl titanate monomer and/or a C₁₋₅₋alkyl zirconate monomer, ii) at least a mono-C₄₋₁₀-alkyl phosphate monomer and iii) at least a Di-C₄₋₁₀-alkyl phosphate monomer, wherein the mono- and di-C₄₋₁₀-alkyl phosphate monomers of the copolymers contain both, linear as well as branched C₄₋₁₀-alkyl residues, wherein the mono- and Di-C₄₋₁₀-alkyl phosphate monomers preferably include at least a C₄₋₆-alkyl residue and more preferably the mono-C₄₋₁₀-alkyl phosphate monomer is mono butyl phosphate monomer and the Di-C₄₋₁₀-alkylkphosphate monomer is dibutyl phosphate monomer.

5. Printing ink or printing varnish in accordance with any of the preceding claims,
**characterized in that**
the molar ratio of branched C₄₋₁₀-alkyl residues in the copolymer of the adhesion promoter based on the sum of linear and branched C₄₋₁₀₋alkyl residues is 20 to 80 %, preferably 30 to 70 %, particularly preferably 40 to 60 % and most preferably 45 to 55 %.

6. Printing ink or printing varnish in accordance with claim 5,
**characterized in that**
in the copolymer of the adhesion promoter the mono-C₄₋₁₀-alkyl phosphate monomer is mono butyl phosphate monomer and the Di-C₄₋₁₀-alkyl phosphate monomer is dibutyl phosphate monomer, wherein the molar ratio of iso-butyl residues based on the sum of iso-butyl residues and n-butyl residues in the copolymer is 20 to 80 %, preferably 30 to 70 %, more preferably 40 to 60 % and most preferably 45 to 55 %.

7. Printing ink or printing varnish in accordance with any of the preceding claims,
**characterized in that**
the weight average molecular weight of the copolymers of the adhesion promoter is 800 to 10,000 g/mol, preferable 1,000 to 2,000 g/mol and particularly preferably 1,000 to 1,500 g/mol.

8. Printing ink or printing varnish in accordance with any of the preceding claims,
**characterized in that**
the copolymer of the adhesion promoter is composed of at least a tetra isopropyl titanate monomer, at least a mono butyl phosphate monomer and at least a dibutyl phosphate monomer, wherein the mono- and di butyl phosphate monomers comprise both, iso-butyl residues as well as n-butyl residues, wherein the molar ratio of iso-butyl residues based on the sum of iso-butyl residues and n-butyl residues in the copolymer is 10 to 90 %.

9. Printing ink or printing varnish in accordance with any of the preceding claims,
**characterized in that**
it contains 0.05 to 6 wt.-%, preferably 0.25 to 6 wt.-% and particularly preferably 0.5 to 2 wt.-% of copolymer.

10. Printing ink or printing varnish in accordance with any of the preceding claims,
**characterized in that**
the binder resin contains at least one compound selected from the group consisting of nitro cellulose, polyurethanes, maleinate resins, synthetic resins, polyamides, acrylates and arbitrary combinations of two or more of the aforementioned compounds.

11. Printing ink or printing varnish in accordance with claim 10,
**characterized in that**
it contains as binder resin 1 to 15 wt.-% and preferably 2 to 10 wt.-% nitrocellulose and optionally 0 to 30 wt.-% and preferably 2 to 25 wt.-% of at least a further resin selected from the group consisting of polyurethanes, maleinate resins, synthetic resins, polyamides, acrylates and arbitrary combinations of two or more of the aforementioned compounds.

12. Printing ink or printing varnish in accordance with any of the preceding claims,
**characterized in that**
it contains:
a) 1 to 40 parts by weight, preferably 5 to 30 parts by weight and particularly preferably 10 to 30 parts by weight of binder resin,
b) 60 to 90 parts by weight, preferably 70 to 85 parts by weight and particularly preferably 75 to 85 parts by weight of solvent,
c) 0.1 to 10 parts by weight, preferably 0.5 to 5 parts by weight and particularly preferably 1 to 3 parts by weight of adhesion promoter and
d) 0.01 to 10 parts by weight, preferably 0.1 to 5 parts by weight and particularly preferably 0.5 to 4 parts by weight of additives,
wherein the sum of components a) to d) amounts to 100 parts by weight, and
e) 0 to 50 parts by weight, preferably 5 to 40 parts by weight and particularly preferably 5 to 35 parts by weight of pigment.

13. Method for preparing an ink or a printing varnish in accordance with any of claims 1 to 12 comprising the preparation of and adhesion promoter comprising the subsequent steps:
a) providing a mixture of a C₄₋₁₀-n-alcohol, a C₄₋₁₀-iso-alcohol and phosphor pentoxide,
b) reacting the mixture provided in step a) at 60 to 150°C for 0.1 to 5 hours and preferably at 80 to 100°C for 0.25 to 2 hours,
c) cooling the reaction mixture to 0 to 50°C, preferably to ambient temperature,
d) adding a C₁₋₅-alkyl titanate and/or C₁₋₅-alkyl zirconate to the mixture obtained in step c),
e) reacting the mixture provided in step d) at 40 to 150°C for 0.1 to 5 hours and preferably at 70 to 90°C for 1 to 3 hours,
f) cooling the reaction mixture to 0 to 50°C, preferably to ambient temperature, and
g) optional adding C₁₋₅-alcohol and/or diluent,
and the mixing of the adhesion promoter with binder resin and solvent.

## Revendications

1. Encre d'impression ou vernis d'impression, en particulier pour imprimer des emballages de produits alimentaires, contenant :
a) au moins une résine formant liant,
b) au moins un solvant et
c) au moins un agent adhésif,
dans laquelle/lequel l'agent adhésif contient un copolymère qui est composé de i) au moins un monomère C₁₋₅-alkyle titanate et/ou un monomère C₁₋₅-alkyle zirconate, tels que les restes alkyles sont linéaires ou ramifiés, et de ii) au moins un monomère mono-C₄₋₁₀-alkyle phosphate et/ou au moins un monomère di-C₄₋₁₀-alkyle phosphate, tels que les monomères mono- et di-C₄₋₁₀-alkyle phosphates contiennent des restes C₄₋₁₀-alkyle aussi bien linéaires que ramifiés,
dans laquelle/lequel l'agent adhésif contient moins de 0,25 % en poids de tributyle phosphate et
dans laquelle/lequel dans le copolymère de l'agent adhésif le rapport molaire des restes C₄₋₁₀-alkyle ramifiés par rapport à la somme des restes C₄₋₁₀-alkyle linéaires et ramifiés s'élève de 10 à 90 %.

2. Encre d'impression ou vernis d'impression selon la revendication 1,
caractérisé(e) en ce que
la quantité de tributyle phosphate contenu dans l'agent adhésif est au maximum de 0,20 % en poids, de préférence au maximum 0,15 % en poids, de manière particulièrement préférée au maximum de 0,10 % en poids, de façon tout particulièrement préférée au maximum de 0,075 % en poids, de manière encore préférée au maximum 0,06 % en poids, et de préférence au maximum tout au plus 0,04 % en poids.

3. Encre d'impression ou vernis d'impression selon la revendication 1 ou 2, caractérisé(e) en ce que celle-ci/celui-ci contient au maximum 75 ppm, de préférence au maximum 50 ppm, de manière plus préférée au maximum 25 ppm, de manière particulièrement préférée au maximum 20 ppm, en particulier de façon préférée au maximum 15 ppm, de manière tout à fait préférée au maximum 10 ppm, et de préférence au maximum tout au plus 5 ppm de tributyle phosphate.

4. Encre d'impression ou vernis d'impression selon l'une au moins des revendications précédentes,
caractérisé(e) en ce que
l'agent adhésif contient un copolymère qui est composé de i) au moins un monomère C₁₋₅-alkyle titanate et/ou au moins un monomère C₁₋₅-alkyle zirconate, de ii) au moins un monomère de mono-C₄₋₁₀-alkyle phosphate et de iii) au moins un monomère di-C₄₋₁₀-alkyle phosphate, tels que les monomères mono- et di-C₄₋₁₀-alkyle phosphates du copolymère incluent des restes de C₄₋₁₀-alkyles aussi bien linéaires que ramifiés, tels que les monomères mono- et di-C₄₋₁₀-alkyle phosphates comprennent de préférence chacun un reste C₄₋₆-alkyle, et de façon particulièrement préférée le monomère mono-C₄₋₁₀-alkyle phosphate est du monomère monobutyle phosphate et le monomère di-C₄₋₁₀-alkyle est du monomère dibutyle phosphate.

5. Encre d'impression ou vernis d'impression selon l'une au moins des revendications précédentes,
caractérisé(e) en ce que
dans le copolymère de l'agent adhésif, le rapport molaire des restes C₄₋₁₀-alkyle ramifiés par rapport à la somme des restes C₄₋₁₀-alkyle linéaires et ramifiés est de 20 à 80 %, de façon préférée 30 à 70 %, de façon particulièrement préférée 40 à 60 %, et de manière tout à fait particulièrement préférée 45 à 55 %.

6. Encre d'impression ou vernis d'impression selon la revendication 5,
caractérisé(e) en ce que
dans le copolymère de l'agent adhésif, le monomère mono-C₄₋₁₀-alkyle phosphate est du monomère monobutyle phosphate et le monomère di-C₄₋₁₀-alkyle phosphate est du monomère dibutyle phosphate, tels que le rapport molaire des restes iso-butyle par rapport à la somme des restes isobutyle et des restes n-butyle dans le copolymère est de 20 à 80 %, de préférence 30 à 70 %, de manière particulièrement préférée 40 à 60 %, et de manière tout à fait particulièrement préférée 40 à 55 %.

7. Encre d'impression ou vernis d'impression selon l'une au moins des revendications précédentes,
caractérisé(e) en ce que
le poids moléculaire moyen quant au poids du copolymère de l'agent adhésif est de 800 à 10 000 g/mol, de préférence 1000 à 2000 g/mol et de façon particulièrement préférée 1000 à 1500 g/mol.

8. Encre d'impression ou vernis d'impression selon l'une au moins des revendications précédentes,
caractérisé(e) en ce que
le copolymère de l'agent adhésif est composé d'au moins un monomère tétra isopropyle titanate, d'au moins un monomère monobutyle phosphate et d'au moins un monomère dibutyle phosphate, tels que les monomères mono- et dibutyle phosphate incluent aussi bien des restes iso-butyle que des restes n-butyle, tels que le rapport molaire des restes iso-butyle par rapport à la somme des restes iso-butyle et des restes n-butyle dans le copolymère s'élève de 10 à 90 %.

9. Encre d'impression ou vernis d'impression selon l'une au moins des revendications précédentes,
caractérisé(e) en ce que
celle-ci/celui-ci contient de 0,05 à 6 % en poids, de préférence 0,25 à 6 % en poids et de façon particulièrement préférée 0,5 à 2 % en poids du copolymère.

10. Encre d'impression ou vernis d'impression selon l'une des revendications précédentes,
caractérisé(e) en ce que
la résine formant liant contient au moins un composé choisi parmi le groupe constitué de nitrocellulose, polyuréthanes, résines maléinates, résines synthétiques, polyamides, acrylates, et des mélanges quelconques de deux ou plusieurs des composés précités.

11. Encre d'impression ou vernis d'impression selon la revendication 10,
caractérisé(e) en ce que
celle-ci/celui-ci contient à titre de résine formant liant de 1 à 15 % en poids et de préférence 2 à 10 % en poids de nitrocellulose et en option 0 à 30 % en poids et de préférence 2 à 25 % en poids au moins une autre résine choisie parmi le groupe comprenant polyuréthanes, résines maléinates, résines synthétiques, polyamides, acrylates, et des mélanges quelconques de deux ou plusieurs des composés précités.

12. Encre d'impression ou vernis d'impression selon l'une au moins des revendications précédentes,
caractérisé(e) en ce que
celle-ci/celui-ci contient :
a) 1 à 40 parties en poids, de préférence 5 à 30 parties en poids, et de façon particulièrement préférée 10 à 30 parties en poids de résine formant liant,
b) 60 à 90 parties en poids, de préférence 70 à 85 parties en poids, et de manière particulièrement préférée 75 à 85 parties en poids de solvant,
c) 0,1 à 10 parties en poids, de préférence 0,5 à cinq parties en poids et de manière particulièrement préférée 1 à 3 parties en poids d'agent adhésif, et
d) 0,01 à 10 parties en poids, de préférence 0,1 à 5 parties en poids et de manière particulièrement préférée de 0,5 à 4 parties en poids d'additifs,
telles que la somme des composants a) à d) s'élève à 100 parties en poids, et
e) 0 à 50 parties en poids, de préférence 5 à 40 parties en poids, et de manière particulièrement préférée 5 à 35 parties en poids de pigment.

13. Procédé pour la production d'une encre d'imprimerie ou d'un vernis d'imprimerie selon l'une des revendications 1 à 12, qui inclut la production d'un agent adhésif, comprenant les étapes suivantes consistant à :
a) préparer un mélange d'un alcool C4-10-n-, d'un alcool C4-10-iso-, et de pentaoxyde de phosphore,
b) faire réagir le mélange préparé à l'étape a) à 60 à 150° C pendant 0,1 à 5 heures, de préférence à 80 à 100° C pendant 0,25 à 2 heures,
c) faire refroidir le mélange de réaction jusqu'à 0 à 50° C, de préférence jusqu'à la température ambiante,
d) ajouter un titanate C₁₋₅-alkyle et/ou un zirconate C₁₋₅-alkyle au mélange obtenu dans l'étape c),
e) faire réagir le mélange obtenu dans l'étape d) à 40 à 150° C pendant 0,1 à 5 heures, de préférence à 70 à 90° C pendant 1 à 3 heures,
f) faire refroidir le mélange de réaction jusqu'à 0 à 50° C, de préférence jusqu'à la température ambiante, et
g) ajouter en option du C₁₋₅-alcool et/ou un solvant, et mélanger l'agent adhésif avec la résine formant liant et le solvant.
